Europäisches Patentamt

(19) European Patent Office

Office européen des brevets

(11) Veröffentlichungsnummer: **0 061 084**
**B1**

(12) # EUROPÄISCHE PATENTSCHRIFT

(45) Veröffentlichungstag der Patentschrift:
23.01.85

(21) Anmeldenummer: 82101980.9

(22) Anmeldetag: 12.03.82

(51) Int. Cl.⁴: **C 09 J 1/02,** C 09 D 1/02

(54) **Kleber und/oder Beschichtungsmassen auf Basis von Alkalimetallsilikatlösungen und deren Verwendung.**

(30) Priorität: 20.03.81 DE 3110967

(43) Veröffentlichungstag der Anmeldung:
29.09.82 Patentblatt 82/39

(45) Bekanntmachung des Hinweises auf die Patenterteilung:
23.01.85 Patentblatt 85/4

(84) Benannte Vertragsstaaten:
AT BE CH DE FR GB IT LI NL SE

(56) Entgegenhaltungen:
FR - A - 2 295 103
GB - A - 2 001 333

(73) Patentinhaber: **Henkel Kommanditgesellschaft auf Aktien, Postfach 1100 Henkelstrasse 67, D-4000 Düsseldorf-Holthausen (DE)**

(72) Erfinder: **Laut, Bernhard, Auf dem Horste 43, D-5160 Düren (DE)**
Erfinder: **Friedemann, Wolfgang, Dr., Stephanusstrasse 14, D-4040 Neuss (DE)**
Erfinder: **Krapp, Gerd, Heubestrasse 1, D-4000 Düsseldorf 13 (DE)**

# 0 061 084

## Beschreibung

Gegenstand der Erfindung sind Kleber und/oder Beschichtungsmassen auf der Basis wäßriger Alkalimetallsilikatlösungen — das heißt Wasserglaslösungen — mit einem Gehalt an feinteiligen anorganischen Füllstoffen und organischen Zusätzen. Gegenstand der Erfindung ist ferner die Verwendung derartiger Kleber oder Beschichtungsmassen zum Kleben und/oder Beschichten von Mineralfaserplatten beziehungsweise -bahnen.

Kleber und/oder Beschichtungsmassen — im folgenden auch kurz als Kleber bezeicnet — auf Basis wäßriger Alkalimetallsilikatlösungen sind seit langem bekannt und werden in großem Umfang für die verschiedensten Zwecke in der Praxis eingesetzt. Beispielsweise dienen solche Kleber zur Herstellung von Übezugsmassen, Anstrichmitteln und Kitten sowie zum Verkleben von Holz, Papier, Keramik und mineralischen Isolierstoffen. Insbesondere werden derartige Kleber auch für die Herstellung von mit Metallfolien kaschierten Mineralfaserbahnen und -platten eingesetzt, die vorzugsweise in der Bauindustrie als Isolier- beziehungsweise Dämmaterialien Verwendung finden.

Bei der Anwendung und Verarbeitung solcher Kleber treten oftmals Probleme in Erscheinung, die durch ein Absetzen der in dem Kleber enthaltenen Füllstoffe bedingt sein können. Derartige Effekte mindern in beträchtlichem Maße die Lagerbeständigkeit der Kleber.

Der vorliegenden Erfindung liegt die Aufgabe zugrunde, solche füllstoffhaltigen Kleber und/oder Beschichtungsmassen auf Wasserglas-Basis zu entwickeln, die den vorstehend erwähnten Nachteil nicht aufweisen und insbesondere zum Kleben und/oder Beschichten von Mineralfaserplatten beziehungsweise -bahnen geeignet sind. Es wurde gefunden, daß ein Zusatz von Zinkseifen zu derartigen füllstoffhaltigen Wasserglas-Klebern beziehungsweise -Beschichtungsmassen zur Lösung der erfindungsgemäßen Aufgabe führt.

In der GB-A-2 001 333 wird eine Klebstofformulierung beschrieben, die gleichfalls auf einer wäßrigen Lösung von Alkalimetallsilikaten basiert. Neben den Alkalimetallsilikaten enthält diese Klebstofflösung als hauptsächliche Komponenten Kaolinit sowie ein wasserlösliches alkalibeständiges Polymeres. Diese Kleber können ferner Aluminiumsalze von geradkettigen aliphatischen Carbonsäuren mit 16 bis 26 Kohlenstoffatomen (Fettsäuren) enthalten. Der Zusatz dieser Aluminiumseifen dient jedoch zur Erhöhung der Hydrophobie und damit zur Verbesserung der Wasserfestigkeit der Kleber. An keiner Stelle der GB-A-2 001 333 findet sich ein Hinweis, daß aufgrund dieser Aluminiumseifen ein Sedimentieren der Füllstoffe in der wäßrigen Kleberlösung verhindert werden kann. Vielmehr wird hier gesagt, daß ein Zusatz von Alkalimetallaluminaten die Viskosität der Lösung erhöht, wodurch zu einer Verhinderung einer Pigmentabsetzung beigetragen wird. Ein Austausch dieser Alkalimetallaluminate durch Zinkseifen wird dem Fachmann durch die GB-A-2 001 333 nicht nahegelegt.

Gegenstand der vorliegenden Erfindung sind demgegenüber Kleber und/oder Beschichtungsmassen auf Basis wäßriger Alkalimetallsilikatlösungen mit einem Gehalt an feinteiligen anorganischen Füllstoffen und organischen Zusätzen, welche dadurch gekennzeichnet sind, daß sie Zinkseifen und Fettsäuren mit einer Kettenlänge im Bereich von 12 bis 22 Kohlenstoffatomen enthalten.

Überraschenderweise wurde nämlich gefunden, daß sich die erfindungsgemäßen Kleber und/oder Beschichtungsmassen durch vorteilhafte anwendungstechnische Eigenschaften im Hinblick auf die Lagerbeständigkeit auszeichnen. Aufgrund des erfindungswesentlichen Zusatzes an Zinkseifen neigen derartige Kleber nämlich auch nach längerer Lagerdauer nicht zu störenden Entmischungserscheingungen; vielmehr wird da unerwünschte Absetzen der Feststoffe weitgehend zurückgedrängt. Auf diese Weise lassen sich unreproduzierbare Ergebnisse beim Verkleben oder Beschichten, die zum Beispiel durch ein nachteiliges »Wegschlagen« — das heißt ein vorschnelles Aufsaugen — des flüssigen Klebers in stark saugende Untergründe bedingt sein können, verhindern.

In diesem Sinne enthalten die erfindungsgemäßen Kleber und/oder Beschichtungsmassen vorzugsweise 1 bis 5 Gewichtsprozent, bezogen auf die Gesamtzusammensetzung, an Zinkseifen. Hierbei gilt in der Regel, daß bei einem hohen Füllstoffgehalt die Zusatzmenge an Zinkseifen gering gehalten werden kann, daß jedoch bei einem geringeren Füllstoffgehalt eine höhere Zusatzmenge an Zinkseifen zweckmäßig ist. Erfindungsgemäß sind Zusatzmengen von 1,5 bis 2 Gewichtsprozent, bezogen auf die Gesamtzusammensetzung, an Zinkseifen besonders bevorzugt.

Von den in Frage kommenden Zinkseifen wird erfindungsgemäß insbesondere das Zinkstearat eingesetzt.

Die erfindungsgemäßen Kleber und/oder Beschichtungsmassen basieren — wie bereits erwähnt — auf einer wäßrigen Alkalimetallsilikatlösung. Dies bedeutet, daß für die erfindungsgemäßen Mittel sowohl Natronwassergläser als auch Kaliwassergläser sowie entsprechende Mischgläser Verwendung finden können. Im Falle einer Verwendung von Mischgläsern läßt sich das Mischungsverhältnis im allgemeinen innerhalb breiter Grenzen variieren. Bevorzugt ist jedoch hierbei eine Zusammensetzung, die 30 Gewichtsprozent Natriumsilikatlösung und 70 Gewichtsprozent Kaliumsilikatlösung aufweist.

Im Hinblick auf die Aufgabenstellung der Erfindung enthalten die erfindungsgemäßen Kleber vorzugsweise 30 bis 80 Gewichtsprozent, bezogen auf die Gesamtzusammensetzung, einer Natrium- und/oder Kaliumsilikatlösung, wobei die Natriumsilikatlösung ein Gewichtsverhältnis $SiO_2/Na_2O$ von 3,3 bis 3,9 : 1 sowie einen Feststoffgehalt von 38 bis 28 Gewichtsprozent und die Kaliumsilikatlösung

2

ein Gewichtsverhältnis $SiO_2/K_2O$ von 2 bis 2,6 : 1 sowie einen Feststoffgehalt von 40 bis 29 Gewichtsprozent aufweisen.

Vorzugsweise enthalten die erfindungsgemäßen Kleber und/oder Beschichtungsmassen 10 bis 40 Gewichtsprozent, bezogen auf die Gesamtzusammensetzung, feinteilige anorganische Füllstoffe. Hierzu kommen in der Regel alle bekannten, mit Wasserglas verträglichen anorganischen Füllstoffe in Frage, beispielsweise Quarzmehl, Kaoline, Calciumcarbonat, Mikroglimmer oder Magnesiumaluminiumsilikate. Bevorzugt wird als Füllstoff feinverteiltes kristallines Calciumcarbonat mit Teilchengrößen bis zu 25 µm verwendet. Die Bestimmung der Teilchengröße kann beispielsweise mit Hilfe eines Coulter-Counter®-Gerätes erfolgen. Zur Verhinderung eines vorzeitigen Aushärtens des Klebers hat es sich als vorteilhaft erwiesen, als kristallines Calciumcarbonat insbesondere metamorphen Calcit zu verwenden.

Ferner können die erfindungsgemäßen Kleber und/oder Beschichtungsmassen eine stabile wäßrige Dispersion eines alkalibeständigen organischen Polymeren auf Basis von Acrylat, Styrolacrylat und/ oder Styrolbutadien enthalten.

Vorzugsweise enthalten die erfindungsgemäßen Mittel 0 bis 24 Gewichtsprozent, bezogen auf die Gesamtzusammensetzung, einer 50gewichtsprozentigen wäßrigen Dispersion organischer Polymerer.

Als geeignete organische Polymere kommen hierzu wasserunlösliche handelsübliche Homo- und/ oder Copolymerisate von Acrylsäureestern, Styrol/Acrylsäureester-Copolymere oder Styrol/Butadien-Copolymere in Frage, wie sie beispielsweise unter den Bezeichnungen Acronal® (BASF) oder Mowilith® (Hoechst) vertrieben werden. Durch einen derartigen Zusatz läßt sich die Wasserfestigkeit der mit den erfindungsgemäßen Klebern erhaltenen Klebungen beziehungsweise der getrockneten Beschichtungsmassen wesentlich verbessern. Im Interesse einer erhöhten Flammbeständigkeit der verklebten beziehungsweise beschichteten Fertigprodukte kann jedoch generell auch auf einen Zusatz von organischen Polymeren verzichtet werden.

Zur Stabilisierung der Alkalimetallsilikatlösung — das heißt zur Vermeidung einer Ausfällung von $SiO_2$ — kann diese gegebenenfalls einen Zusatz einer wasserlöslichen mono- und/oder polyquartären Stickstoffverbindung, die am quartären Stickstoffatom mindestens eine hydroxylgruppenfreie Alkylgruppe aufweist, enthalten. Derartige Stabilisierungsmittel sind beispielsweise in der DE-OS 1 667 538 beschrieben.

Im Hinblick auf die Wasserfestigkeit der zu erzielenden Klebung kann es gegebenenfalls von Vorteil sein, den erfindungsgemäßen Klebern und/oder Beschichtungsmassen bis zu 2 Gewichtsprozent, bezogen auf die Gesamtzusammensetzung, Lithiumhydroxid zuzusetzen. Ferner können die Kleber bis zu 1 Gewichtsprozent an mit Wasserglas verträglichen, feinverteilten, alkalibeständigen Farbpigmenten, wie sie üblicherweise für derartige Zwecke Verwendung finden, enthalten. Als Pigmente kommen hier beispielsweise Titandioxid, Eisenoxid, Chromoxid, Bariumchromat, Kobaltgrün oder -blau sowie Cadmiumselenid oder -sulfid in Frage.

Die erfindungsgemäßen Kleber lassen sich problemlos durch Vermischen der einzelnen Komponenten herstellen. In der Regel wird hierbei die Alkalimetallsilikatlösung, beziehungsweise das Gemisch aus Natrium- und Kaliumsilikatlösung vorgelegt und unter Rühren Füllstoffe und Zinkseife hinzugefügt. In diese Mischung wird gegebenenfalls die wäßrige Dispersion des organischen Polymeren eingerührt. Der so erhaltene Kleber erweist sich unter Ausschluß von Luft im Hinblick auf das Absetzverhalten als ausgezeichnet lagerungsbeständig.

Vorzugsweise werden die erfindungsgemäßen Kleber und/oder Beschichtungsmassen zum Kleben und/oder Beschichten von Mineralfaserplatten beziehungsweise -bahnen verwendet. Hierunter ist insbesondere das Kaschieren von Mineralfaserplatten oder -bahnen mit Metallfolien zu verstehen. Darüber hinaus lassen sich die erfindungsgemäßen Kleber jedoch gleichfalls für alle diejenigen Zwecke verwenden, für die Kleber auf Basis wäßriger Alkalimetallsilikatlösungen üblicherweise eingesetzt werden.

In den nachstehenden Beispielen werden Kleber und/oder Beschichtungsmassen im Sinne der Erfindung näher erläutert.

Beispiel 1

Der erfindungsgemäße Kleber weist die folgende Zusammensetzung auf:

78,5 Gew.-% einer wäßrigen Natriumsilikatlösung mit einem Gewichtsverhältnis $SiO_2/Na_2O$ von 3,35 und einem Feststoffgehalt von 35 Gew.-%,
10 Gew.-% kristallines Calciumcarbonat mit Teilchengrößen bis zu 25 µm,
1,5 Gew.-% Zinkstearat,
5 Gew.-% einer 50gew.-%igen wäßrigen Polyacrylsäureester-Dispersion,
5 Gew.-% entionisiertes Wasser.

3

Der Kleber wird — wie vorstehend beschrieben — durch Einrühren des anorganischen Füllstoffes, der Zinkseife sowie der Dispersion des organischen Polymeren in die vorgelegte Wasserglaslösung erhalten. Das fertige Gemisch wird bis zur völligen Homogenisierung weiter gerührt.

Die Prüfung des Absetzverhaltens des Klebers wurde in der folgenden Weise vorgenommen: in einem graduierten Standzylinder werden 250 ml des gut homogenisierten Klebers eingefüllt und die Feststoff-Sedimentation über einen Zeitraum von bis zu 4 Wochen im verschlossenen Zylinder beobachtet. Das Eintreten einer Sedimentation der Feststoffe zeigt sich in einer deutlich sichtbaren Phasentrennung von überstehender klarer Lösung einerseits und dem sich absetzenden Füllstoffanteil andererseits, wobei die Verwendung des graduierten Standzylinders ein Ablesen der jeweiligen Mengen (in ml) erlaubt. Bei dieser Prüfmethode ist es gegebenenfalls erforderlich — beispielsweise im Falle stark sedimentierender Füllstoffe — in kürzeren Zeitabständen den Anteil der jeweiligen Phasen abzulesen, ansonsten genügt eine tägliche Kontrolle.

Im Falle des vorliegenden erfindungsgemäßen Klebers zeigte sich auch nach längerer Prüfdauer keine Phasentrennung.

Die in den nachstehenden Beispielen beschriebenen erfindungsgemäßen Kleber-Formulierungen wurden analog Beispiel 1 hergestellt und getestet. Sofern nicht anders vermerkt, weisen diese Kleber-Formulierungen mit Beispiel 1 vergleichbare gute Eigenschaften hinsichtlich des Absetzverhaltens auf.

### Beispiel 2

78,5 Gew.-% einer wäßrigen Natriumsilikatlösung analog Beispiel 1,
10 Gew.-% kristallines Calciumcarbonat mit Teilchengrößen bis zu 25 μm,
1,5 Gew.-% Zinkbehenat,
5 Gew.-% einer 50gew.-%igen Dispersion analog Beispiel 1,
5 Gew.-% entionisiertes Wasser.

### Beispiel 3

78,5 Gew.-% einer wäßrigen Natriumsilikatlösung analog Beispiel 1,
10 Gew.-% kristallines Calciumcarbonat mit Teilchengrößen bis zu 25 μm,
1,5 Gew.-% Zinklaurat,
5 Gew.-% einer 50gew.-%igen Dispersion analog Beispiel 1,
5 Gew.-% entionisiertes Wasser.

In diesem Falle zeigte sich nach einer Dauer von 24 Stunden eine Phasentrennung in 10 ml überstehender klarer Lösung und 240 ml restlichem füllstoffhaltigen Kleber. Eine weitere wesentliche Veränderung wurde auch nach längerer Prüfdauer nicht beobachtet.

### Beispiel 4

78,5 Gew.-% einer wäßrigen Alkalimetallsilikatlösung, enthaltend: 70 Gew.-% Kaliwasserglas mit einem Gewichtsverhältnis $SiO_2/K_2O$ von 2,6 und einem Feststoffgehalt von 28,5 Gew.-% sowie 30 Gew.-% Natronwasserglas mit einem Gewichtsverhältnis $SiO_2/Na_2O$ von 3,3 und einem Feststoffgehalt von 36 Gew.-%,
10 Gew.-% kristallines Calciumcarbonat mit Teilchengrößen bis zu 25 μm,
1,5 Gew.-% Zinkstearat,
5 Gew.-% einer 50gew.-%igen wäßrigen Polyacrylsäureester-Dispersion,
5 Gew.-% entionisiertes Wasser.

### Beispiel 5

60 Gew.-% einer wäßrigen Alkalimetallsilikatlösung analog Beispiel 4,
30 Gew.-% kristallines Calciumcarbonat mit Teilchengrößen bis zu 25 μm,
1 Gew.-% Zinkstearat,
5 Gew.-% einer 50gew.-%igen Dispersion analog Beispiel 4,
4 Gew.-% entionisiertes Wasser.

### Beispiel 6

| | |
|---|---|
| 59,5 Gew.-% | einer wäßrigen Alkalimetallsilikatlösung analog Beispiel 4, |
| 10 Gew.-% | kristallines Calciumcarbonat mit Teilchengrößen bis zu 25 $\mu$m, |
| 1,5 Gew.-% | Zinkstearat, |
| 24 Gew.-% | einer 50gew.-%igen Dispersion analog Beispiel 4, |
| 5 Gew.-% | entionisiertes Wasser. |

### Beispiel 7

| | |
|---|---|
| 40 Gew.-% | einer wäßrigen Alkalimetallsilikatlösung analog Beispiel 4, |
| 30 Gew.-% | kristallines Calciumcarbonat mit Teilchengrößen bis zu 25 $\mu$m, |
| 1 Gew.-% | Zinkstearat, |
| 24 Gew.-% | einer 50gew.-%igen Dispersion analog Beispiel 4, |
| 5 Gew.-% | entionisiertes Wasser. |

### Beispiel 8

| | |
|---|---|
| 78 Gew.-% | einer wäßrigen Alkalimetallsilikatlösung analog Beispiel 4, |
| 10 Gew.-% | kristallines Calciumcarbonat mit Teilchengrößen bis zu 25 $\mu$m, |
| 2 Gew.-% | Zinkstearat, |
| 5 Gew.-% | einer 50gew.-%igen Dispersion analog Beispiel 4, |
| 5 Gew.-% | entionisiertes Wasser. |

Entsprechende Kleber-Formulierungen ohne einen erfindungsgemäßen Zusatz von Zinkseifen zeigten bei der Prüfung des Absetzverhaltens meist bereits nach 24 Stunden mehr oder weniger stark ausgeprägte Phasentrennungen.

## Patentansprüche

1. Kleber und/oder Beschichtungsmassen auf Basis wäßriger Alkalimetallsilikatlösungen mit einem Gehalt an feinteiligen anorganischen Füllstoffen und organischen Zusätzen, dadurch gekennzeichnet, daß sie Zinkseifen von Fettsäuren mit einer Kettenlänge im Bereich von 12 bis 22 Kohlenstoffatomen enthalten.

2. Kleber und/oder Beschichtungsmassen nach Anspruch 1, dadurch gekennzeichnet, daß sie 1 bis 5 Gewichtsprozent, vorzugsweise 1,5 bis 2 Gewichtsprozent, bezogen auf die Gesamtzusammensetzung, Zinkseifen enthalten.

3. Kleber und/oder Beschichtungsmassen nach Anspruch 1 und 2, dadurch gekennzeichnet, daß sie als Zinkseife Zinkstearat enthalten.

4. Kleber und/oder Beschichtungsmassen nach Anspruch 1 bis 3, dadurch gekennzeichnet, daß sie 30 bis 80 Gewichtsprozent, bezogen auf die Gesamtzusammensetzung, einer Natrium- und/oder Kaliumsilikatlösung enthalten, wobei die Natriumsilikatlösung ein Gewichtsverhältnis $SiO_2/Na_2O$ von 3,3 bis 3,9 : 1 sowie einen Feststoffgehalt von 38 bis 28 Gewichtsprozent und die Kaliumsilikatlösung ein Gewichtsverhältnis $SiO_2/K_2O$ von 2 bis 2,6 : 1 sowie einen Feststoffgehalt von 40 bis 29 Gewichtsprozent aufweisen.

5. Kleber und/oder Beschichtungsmassen nach Anspruch 1 bis 3, dadurch gekennzeichnet, daß sie 10 bis 40 Gewichtsprozent, bezogen auf die Gesamtzusammensetzung, feinteilige anorganische Füllstoffe enthalten.

6. Kleber und/oder Beschichtungsmassen nach Anspruch 5, dadurch gekennzeichnet, daß sie als anorganischen Füllstoff feinverteiltes kristallines Calciumcarbonat, vorzugsweise in Form metamorphen Calcits, mit Teilchengrößen bis zu 25 $\mu$m enthalten.

7. Kleber und/oder Beschichtungsmassen nach Anspruch 1 bis 3, dadurch gekennzeichnet, daß sie 0 bis 24 Gewichtsprozent, bezogen auf die Gesamtzusammensetzung, einer 50gewichtsprozentigen stabilen wäßrigen Dispersion eines alkalibeständigen organischen Polymeren auf Basis von Acrylat, Styrolacrylat und/oder Styrolbutadien enthalten.

8. Verwendung der Kleber und/oder Beschichtungsmassen nach Anspruch 1 bis 7 zum Kleben und/oder Beschichten von Mineralfaserplatten beziehungsweise -bahnen.

## Claims

1. Adhesives and/or coating compositions based on aqueous alkali metal silicate solutions containing finely divided inorganic fillers und organic additives, characterized in that they contain zinc soaps of fatty acids having a chain length of from 12 to 22 carbon atoms.

2. Adhesives and/or coating compositions as claimed in Claim 1, characterized in that they contain from 1 to 5% by weight and preferably from 1.5 to 2% by weight, based on the composition as a whole, of zinc soaps.

3. Adhesives and/or coating compositions as claimed in Claims 1 and 2, characterized in that they contain zinc stearate as the zinc soap.

4. Adhesives and/or coating compositions as claimed in Claims 1 to 3, characterized in that they contain from 30 to 80% by weight, based on the composition as a whole, of a sodium and/or potassium silicate solution, the sodium silicate solution having a ratio by weight of $SiO_2$ to $Na_2O$ of from 3.3 to 3.9 : 1 and a solids content of from 38 to 28% by weight and the potassium silicate solution having a ratio by weight of $SiO_2$ to $K_2O$ of from 2 to 2.6 : 1 and a solids content of from 40 to 29% by weight.

5. Adhesives and/or coating compositions as claimed in Claims 1 to 3, characterized in that they contain from 10 to 40% by weight, based on the composition as a whole, of finely divided inorganic fillers.

6. Adhesives and/or coating compositions as claimed in Claim 5, characterized in that they contain as inorganic finely divided crystalline calcium carbonate, preferably in the form of metamorphic calcite, with particle sizes of up to 25 $\mu$m.

7. Adhesives and/or coating compositions as claimed in Claims 1 to 3, characterized in that they contain from 0 to 24% by weight, based on the composition as a whole, of a 50% by weight stable aqueous dispersion of an alkalistable organic polymer based on acrylate, styrene acrylate and/or styrene butadiene.

8. The use of the adhesives and/or coating compositions claimed in Claims 1 to 7 for bonding and/or coating mineral fiber boards and/or sheets.

## Revendications

1. Produits adhésifs et/ou de revêtement à base de solutions aqueuses de silicate alcalin, avec une teneur en charges minérales finement dispersées et en additifs organiques, produits caractérisés en ce qu'ils contiennent des savons zinciques d'acides gras avec une longueur de chaîne de l'ordre de 12 à 22 atomes de carbone.

2. Produits adhésifs et/ou de revêtement selon les revendication 1, caractérisés en ce qu'ils contiennent 1 à 5% en poids, de préférence 1,5 à 2% en poids de savons zinciques calculé sur la composition totale.

3. Produits adhésifs et/ou de revêtement selon les revendications 1 et 2, caractérisés en ce que, comme savon zincique, ils contiennent du stéarate de zinc.

4. Produits adhésifs et/ou de revêtement selon les revendications 1 à 3, caractérisés en ce qu'ils contiennent 30 à 80% en poids, calculé sur la composition totale, d'une solution de silicate de sodium et/ou de potassium, la solution de silicate de sodium présentant un rapport en poids $SiO_2/Na_2O$ de 3,3 à 3,9 : 1 ainsi qu'une teneur en matière solide de 38 à 28% en poids, et la solution de silicate de potassium présentant un rapport en poids $SiO_2/K_2O$ de 2 à 2,6 : 1, ainsi qu'une teneur en matière solide de 40 à 39% en poids.

5. Produits adhésifs et/ou de revêtement selon les revendications 1 à 3, caractérisés en ce qu'ils contiennent 10 à 40% en poids, calculé sur la composition totale, de charge minérale finement dispersée.

6. Produits adhésifs et/ou de revêtement selon les revendication 5, caractérisés en ce qu'ils contiennent, comme charge minérale, du carbonate de calcium cristallin finement divisé, de préférence sous forme de calcite métamorphique, avec une dimension des particules n'excédant pas 25 $\mu$.

7. Produits adhésifs et/ou de revêtement selon les revendications 1 à 3, caractérisés en ce qu'ils contiennent 0 à 24%, calculé sur la composition totale, d'une dispersion aqueuse à 50%, stable, d'un polymère organique résistant aux agents alcalins, à base d'acrylate, de styrène-acrylate et/ou de styrène-butadiène.

8. Utilisation des produits adhésifs et/ou de revêtement selon les revendications 1 à 7 pour le collage et/ou l'enduction de plaques ou de feuilles contenues en fibres minérales.